# FASCICULE DE BREVET EUROPEEN

(11) **EP 2 877 529 B1**
(45) Date de publication et mention de la délivrance du brevet: **11.09.2019**
(21) Numéro de dépôt: 13740290.5
(22) Date de dépôt: 24.07.2013
(51) Int. Cl.: C08L 7/00, C08L 9/06, C08L 25/10

(54) **PNEUMATIQUE AYANT UNE ADHERENCE SUR SOL MOUILLE AMELIOREE**
REIFEN MIT VERBESSERTER GRIFFIGKEIT AUF NASSEM BODEN
TYRE WITH IMPROVED GRIP ON WET GROUND

(30) Priorité: 25.07.2012 FR 1257194
(43) Date de publication de la demande: 03.06.2015
(73) Titulaire: Compagnie Générale des Etablissements Michelin, 63000 Clermont-Ferrand (FR)
(72) Inventeur: MATHEY, Olivier, F-63040 Clermont-Ferrand Cedex 9 (FR); DUREL, Olivier, F-63040 Clermont-Ferrand Cedex 9 (FR)
(74) Mandataire: Cohen, Sylvia
(86) Numéro de dépôt international: PCT/EP2013/065626
(87) Numéro de publication internationale: WO 2014/016340

(56) Documents cités:
- WO-A1-2012/069585
- US-A1- 2003 080 618
- US-A1- 2005 148 713
- US-B1- 7 259 205

## Description

L'invention concerne une composition de caoutchouc notamment pour bande de roulement de pneumatique, et plus particulièrement pour pneumatique destiné à équiper des véhicules portant de lourdes charges et roulant à vitesse soutenue, tels que, par exemple les camions, tracteurs, remorques ou bus routiers, avion etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. Or depuis que les économies de carburant et la nécessité de protéger l'environnement sont devenues une priorité, il s'est avéré nécessaire de produire des pneumatiques ayant une résistance au roulement réduite, tout en continuant à améliorer la performance d'adhérence sur sol mouillé.

Ainsi il est connu d'utiliser dans la matrice élastomérique de tels pneumatiques, en coupage avec du caoutchouc naturel, des copolymères de butadiène-styrène (SBR) ayant une Tg élevée (supérieure à -65°C) cependant l'utilisation de tels élastomères augmente les pertes hystérétiques et donc dégrade la résistance au roulement de ces pneumatiques.

Les documents US 7 259 205 et WO 2012/069585 divulguent des compositions pour pneumatiques à base majoritairement de SBR, comportant un fort taux de charges renforçantes et un très fort taux de plastifiants, qui permettent une amélioration de la performance d'adhérence sur sol mouillé.

La demanderesse a découvert de façon surprenante que l'association au sein d'une composition de caoutchouc, d'un SBR de Tg élevée et d'une résine plastifiante de haute Tg (Tg supérieure ou égale à 20°C) avec un taux inférieur ou égal à 10 pce, permettait d'améliorer l'adhérence sur sol mouillé de pneumatiques dont la bande de roulement possède une telle composition, tout en conservant une résistance au roulement très proche.

L'invention a donc pour objet un pneumatique comportant au moins une composition à base d'au moins un coupage de caoutchouc naturel, NR, ou polyisoprène de synthèse, et d'un copolymère de butadiène-styrène, SBR, le SBR ayant un taux supérieur ou égal à 20 parties pour cent parties d'élastomère, pce, une charge renforçante comprenant du noir de carbone, caractérisé en ce que la composition comprend une résine plastifiante de température de transition vitreuse, Tg, supérieure ou égale à 20°C et que le SBR a une Tg supérieure à -65°C et que le taux de résine plastifiante est inférieur ou égal à 10 pce

L'invention concerne également un pneumatique comportant une bande de roulement ayant telle composition.

### I. MESURES ET TESTS UTILISES

Les compositions de caoutchouc sont caractérisées après cuisson, comme indiqué ci-après.

### Propriétés dynamiques

Les propriétés dynamiques tan(δ)ₘₐₓ et tan(δ)_{-20°C} sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz.
- Pour la mesure de tan(δ)ₘₐₓ, on effectue un balayage à 60°C en amplitude de déformation de 0,1 à 100% (cycle aller), puis de 100% à 1% (cycle retour). Les résultats exploités sont le facteur de perte (tan δ). Pour le cycle aller, on indique la valeur maximale de tan δ observée (tan(δ)ₘₐₓ), entre les valeurs à 0,1% et à 100% de déformation (effet Payne).

Une valeur arbitraire de 100 est donnée pour la composition témoin, un résultat supérieur à 100 indiquant une augmentation de la valeur de tan(δ)ₘₐₓ, correspondant à une dégradation de la résistance au roulement.
- Pour la mesure de tan(δ)_{-20°C}, on effectue un balayage en température, sous une contrainte de 0,7MPa, on enregistre la valeur de tan observée à -20°C.

On rappelle que de manière bien connue de l'homme du métier, la valeur est représentative du potentiel d'adhérence sur sol mouillée : plus la valeur de tan(δ)_{-20°C} est élevée, meilleure est l'adhérence.

Une valeur arbitraire de 100 est donnée pour la composition témoin, un résultat supérieur à 100 indiquant une augmentation de la valeur de tan(δ)_{-20°C}, correspondant donc à une amélioration de la performance d'adhérence sur sol mouillé.

### II. DESCRIPTION DETAILLEE DE L'INVENTION

La composition de caoutchouc selon l'invention, utilisable pour la fabrication de bande de roulement de pneumatiques, comporte au moins un coupage de caoutchouc naturel ou de polyisoprène de synthèse, et un copolymère de butadiène-styrène (SBR) ayant une Tg élevée (supérieure à -65°C) ayant un taux supérieur ou égal à 20 parties pour cent parties d'élastomère, pce, une charge renforçante comprenant du noir de carbone et une résine plastifiante de température de transition vitreuse, Tg, supérieure ou égale à 20°C avec un taux inférieur ou égal à 10 pce.

Sauf indication expresse différente, les pourcentages indiqués dans la présente demande sont des % en masse.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

La matrice élastomérique de la composition conforme à l'invention comprend au moins :
- du caoutchouc naturel, NR, ou polyisoprène de synthèse, avec un taux allant de préférence de 30 pce à 80 pce, plus préférentiellement supérieur ou égal à 40 pce, encore plus préférentiellement supérieur ou égal à 60 pce ;
- un SBR ayant une Tg (Tg, mesurée selon ASTM D3418) supérieure à -65°C, avec un taux supérieur ou égal à 20 pce, de préférence avec un taux allant de 20 à 80 pce, plus préférentiellement de 20 à 60 pce, et encore plus préférentiellement de 20 à 40 pce. De façon encore plus préférentielle, le SBR a une Tg supérieure ou égale à -50°C.

Avantageusement la matrice élastomérique peut comprendre un polybutadiène, BR, de préférence dans un taux allant de 5 à 40 pce, et plus préférentiellement de 10 à 30 pce.

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).
On peut aussi citer comme élastomères fonctionnels ceux préparés par l'utilisation d'un amorceur fonctionnel, notamment ceux portant une fonction amine ou étain (voir par exemple WO 2010072761).
Comme autres exemples d'élastomères fonctionnalisés, on peut citer également des élastomères (tels que SBR, BR, NR ou IR) du type époxydés.

On notera que le SBR peut être préparé en émulsion ("ESBR") ou en solution ("SSBR »). Qu'il s'agisse de ESBR ou de SSBR, on utilise notamment un SBR ayant une teneur en styrène moyenne, par exemple comprise entre 10% et 35% en poids, ou une teneur en styrène élevée, par exemple de 35 à 55%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 65°C, de préférence supérieure ou égale à -50°C.

A titre de BR, conviennent les BR présentant un taux (% molaire) d'enchaînements cis-1,4 supérieur à 90%.

La composition selon l'invention peut contenir un autre élastomère diénique. Les élastomères diéniques de la composition pouvant être utilisés en association avec tout type d'élastomère synthétique autre que diénique, voire avec des polymères autres que des élastomères, par exemple des polymères thermoplastiques.

### Charge renforçante, agent de couplage et agent de recouvrement

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB est la surface externe déterminée selon la norme française NF T 45-007 de novembre 1987 (méthode B).

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). A titre de noir de carbone, conviennent également les noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination EcoblackTM « CRX 2000 » ou « CRX4000 ».

Conviennent les noirs de carbone de surface spécifique CTAB comprise entre 75 à 200 m2/g , et plus particulièrement les noirs de carbone de surface spécifique CTAB comprise entre 100 et 150 m2/g, tels que les noirs de carbone de série 100 ou 200.

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Pour les compositions conformes à l'invention, le taux de charge renforçante totale (noir de carbone et/ou charge inorganique renforçante telle que silice etc.) est de préférence compris entre 20 et 200 pce, plus préférentiellement entre 30 et 150 pce.
Plus préférentiellement encore le le taux de charge renforçante va de 40 à 70 pce, notamment de 45 à 65 pce.

Selon un mode de réalisation de l'invention, la composition comprend outre le noir de carbone, une charge renforçante inorganique avec un taux préférentiel d'au moins 10% de la charge renforçante totale et plus préférentiellement d'au plus 50% de la charge renforçante totale.

Selon une variante de réalisation de l'invention la charge inorganique comprend de la silice et préférentiellement elle est constituée préférentiellement par de la silice.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Les compositions de caoutchouc peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru. Ces agents de recouvrement sont bien connus (voir par exemple les demandes de brevet WO 2006/125533, WO 2007/017060 et WO 2007/003408), on citera par exemple des hydroxysilanes ou des silanes hydrolysables tels que des hydroxysilanes (voir par exemple WO 2009/062733) des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), des polyorgano-siloxanes hydroxylés ou hydrolysables (par exemple des α,ω-dihydroxy-poly-organosilanes (notamment des α,ω-dihydroxy-polydiméthylsiloxanes) (voir par exemple EP 0 784 072), des acides gras comme par exemple l'acide stéarique.

### Résine plastifiante hydrocarbonée

Les compositions de caoutchouc de l'invention utilisent une résine plastifiante hydrocarbonée dont la Tg, température de transition vitreuse, est supérieure à 20°C et dont la température de ramolissement (en anglais « softening point ») est inférieure à 170°C, comme expliqué en détail ci-après.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, naphténiques, aromatiques ou encore du type aliphatique/ naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (Differential Scanning Calorimetry), selon la norme ASTM D3418 (1999), et la température de ramolissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le composé vinyle-aromatique est du styrène ou un monomère vinylaromatique issu d'une coupe C9 (ou plus généralement d'une coupe C8 à C10). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
résines de copolymère limonène/ styrène : par DRT sous dénomination "Dercolyte TS 105" de la société DRT, par ARIZONA Chemical Company sous dénominations "ZT115LT" et "ZT5100".

Le taux de résine hydrocarbonée est préférentiellement va de 1 à 20 pce. Le taux de résine hydrocarbonée est encore plus préférentiellement inférieur ou égal à 10 pce.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 1 et 8 pce, en particulier entre 1 et 6 pce lorsque la composition de l'invention est destinée, selon un mode préférentiel de l'invention, à constituer une "gomme" (ou composition de caoutchouc) interne d'un pneumatique. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### Autres constituants

Les matrices de caoutchouc des composites conformes à l'invention comportent également tout ou partie des additifs habituellement utilisés dans les compositions de caoutchouc destinées à la fabrication de systèmes de liaison au sol des véhicules automobiles, en particulier de pneumatiques, tels que par exemple des agents anti-vieillissement, des antioxydants, des plastifiants ou des huiles d'extension que ces derniers soient de nature aromatique ou non-aromatique, notamment des huiles très faiblement ou non aromatiques (e.g., huiles naphténiques ou paraffiniques, huiles MES ou TDAE), des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des agents antiréversion tels que par exemple l'hexathiosulfonate de sodium ou le N,N'-m-phénylène-biscitraconimide, des accepteurs et donneurs de méthylène (par exemple résorcinol, HMT ou H3M) ou autres résines renforçantes, bismaléimides, d'autres systèmes promoteurs d'adhésion vis-à-vis de renforts métalliques notamment laitonnés, comme par exemple ceux du type "RFS" (résorcinol-formaldéhyde-silice) voire encore d'autres sels métalliques comme par exemple des sels organiques de cobalt ou de nickel. L'homme du métier saura ajuster la formulation de la composition en fonction de ses besoins particuliers.

### Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue peut ensuite être calandrée, par exemple sous la forme d'une feuille, d'une plaque ou encore extrudée, par exemple pour former un profilé de caoutchouc utilisé pour la fabrication d'un composite ou d'un produit semi-fini, tel que par exemple des nappes, bandes, sous-couches, autres blocs de caoutchouc renforcés de renforts métalliques, destinés à former par exemple une partie de la structure d'un pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

On notera que l'invention concerne les compositions de caoutchouc précédemment décrites tant à l'état dit "cru" (i.e. avant cuisson) qu'à l'état dit "cuit" ou vulcanisé (i.e. après vulcanisation).

### III- EXEMPLES DE REALISATION DE L'INVENTION

Les exemples qui suivent permettent d'illustrer l'invention, cette dernière ne saurait cependant être limitée à ces seuls exemples.

### Préparation des compositions de caoutchouc

On procède pour les essais qui suivent de la manière suivante: on introduit dans un mélangeur interne, rempli à 70% et dont la température initiale de cuve est d'environ 50°C, les élastomères diéniques mélangés (NR, SBR et le cas échéant BR), la charge renforçante (noir de carbone et, le cas échéant, silice), le cas échéant l'agent de couplage (lorsque ce dernier est présent) puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3 Caractérisation des compositions de caoutchouc

### III-3.1 Essai 1

Cet essai a pour but de démontrer les propriétés améliorées de compositions conformes à l'invention en comparaison avec des compositions témoins classiquement utilisées dans les bandes de roulement de pneumatique routier.

On prépare pour cela six compositions à base d'un coupage NR/BR/SBR 40/20/40 pce renforcées par du noir de carbone.

Ces six compositions diffèrent essentiellement par les caractéristiques techniques qui suivent :
- la composition témoin C1 est une composition témoin classiquement utilisée comprenant un SSBR de Tg -65°C sans résine plastifiante,
- la composition témoin C2 comprend un SSBR de Tg -65°C et une résine plastifiante de haute Tg (44°C),
- la composition témoin C3 comprend un SSBR de Tg -65°C et une résine plastifiante de haute Tg (72°C),
- la composition témoin C4 comprend un SSBR de Tg élevée (-48°C) sans résine plastifiante,
- la composition conforme à l'invention C5 comprend un SSBR de Tg élevée (-48°C) et une résine plastifiante de haute Tg (44°C),
- la composition conforme à l'invention C6 comprend un SSBR de Tg élevée (-48°C) et une résine plastifiante de haute Tg (72°C).

Les tableaux 1 et 2 donnent respectivement la formulation des différentes compositions (tableau 1- taux des différents produits exprimés en pce) et les propriétés après cuisson (environ 30 min à 140°C).
On notera que le taux d'accélérateur des différentes compositions est ajusté par rapport à la présence de résine comme sait le faire l'homme du métier, afin que ces compositions puissent être comparables avec des conditions identiques de cuisson (temps et température).

L'examen du tableau 2 montre que l'ajout d'une résine de haute Tg aliphatique ou terpénique (compositions C2 et C3) à une formulation témoin classique (C1) permet d'obtenir une amélioration des propriétés d'adhérence sur sol mouillé (valeur de tan(δ)-20° améliorée) avec une faible augmentation de la résistance au roulement (valeur de tan(δ)ₘₐₓ). De la même façon la composition C4 (présentant un SBR de Tg élevée mais sans résine plastifiante de haute Tg) par rapport à la composition témoin classique C1 présente également une amélioration des propriétés d'adhérence sur sol mouillé (valeur de tan(δ)-20° améliorée) avec une faible augmentation de la résistance au roulement.
Mais on constate de façon surprenante que les compositions C5 et C6 conformes à l'invention comprenant à la fois un SBR de Tg élevée et une résine de haute Tg, permettent par rapport à la composition C1, une très significative amélioration des propriétés d'adhérence sur sol mouillé accompagnée d'une dégradation de la performance résistance au roulement mais qui reste faible. Ces résultats pour les compositions C5 et C6 conformes à l'invention vont bien au-delà d'une simple additivité de l'effet du SBR de Tg élevée et de la résine de haute Tg (effet obtenu pour les compositions C2 ou C3 ajouté à l'effet obtenu pour la composition C4) et montrent une vraie synergie entre ces constituants dans les compositions conformes à l'invention.

### III-3.2 Essai 2

Cet essai a pour but de démontrer les propriétés améliorées de compositions conformes à l'invention avec des formulations différentes de celle de l'essai 1, en comparaison avec des compositions témoins classiquement utilisées dans les bandes de roulement de pneumatique routier.

On prépare pour cela six compositions, deux compositions à base d'un coupage élastomérique NR/BR/SBR 60/20/20 renforcées par du noir de carbone, deux compositions à base d'un coupage élastomérique NR/BR/SBR 60/15/25 renforcées par un coupage de noir de carbone et de silice et deux compositions à base d'un coupage élastomérique NR/SBR 80/20 renforcées par du noir de carbone.

Les six compositions diffèrent essentiellement par les caractéristiques techniques qui suivent :
- les compositions témoins C7, C9 et C11 sont des compositions témoins classiquement utilisées comprenant un SSBR de Tg -65°C sans résine plastifiante,
- les compositions conformes à l'invention C8, C10 et C12 comprennent un SSBR de Tg élevée (-48°C) et une résine plastifiante de haute Tg (44°C).

Les tableaux 3 et 4 donnent respectivement la formulation des différentes compositions (tableau 3- taux des différents produits exprimés en pce) et les propriétés après cuisson (environ 30 min à 140°C).
Comme dans l'essai précédent, le taux d'accélérateur des différentes compositions est ajusté par rapport à la présence de résine comme sait le faire l'homme du métier, afin que ces compositions puissent être comparables avec des conditions identiques de cuisson (temps et température).

On constate de façon surprenante que les compositions C8, C10 et C12 conformes à l'invention comprenant à la fois un SBR de Tg élevée et une résine de haute Tg, permettent par rapport respectivement aux compositions témoins C7, C9 et C11, une très significative amélioration des propriétés d'adhérence sur sol mouillé bien que s'accompagnant d'une légère dégradation de la performance résistance au roulement.

### III-3.3 Essai 3

Cet essai a pour but de démontrer les propriétés améliorées d'une composition conforme à l'invention avec une formulation différente de celle des essais 1 et 2, en comparaison avec une composition témoin classiquement utilisée dans les bandes de roulement de pneumatique routier.

On prépare pour cela deux compositions à base d'un coupage NR/BR/SBR 60/10/30 pce renforcées par du noir de carbone.

Ces deux compositions diffèrent essentiellement par les caractéristiques techniques qui suivent :
- la composition témoin C13 est une composition témoin classiquement utilisée comprenant un SSBR de Tg -65°C sans résine plastifiante,
- la composition conforme à l'invention C14 comprend un SSBR de Tg élevée (-48°C) et une résine plastifiante de haute Tg (44°C),

Les tableaux 5 et 6 donnent respectivement la formulation des différentes compositions (tableau 5- taux des différents produits exprimés en pce) et les propriétés après cuisson (environ 30 min à 140°C).
Le taux d'accélérateur des différentes compositions est ajusté par rapport à la présence de résine comme sait le faire l'homme du métier, afin que ces compositions puissent être comparables avec des conditions identiques de cuisson (temps et température).

L'examen du tableau 6 montre que de façon surprenante la composition C14 conforme à l'invention comprenant à la fois un SBR de Tg élevée et une résine de haute Tg, permet par rapport à la composition C13, une très significative amélioration des propriétés d'adhérence sur sol mouillé accompagnée d'une dégradation de la performance résistance au roulement mais qui reste faible.

Ainsi on observe pour des compositions conformes à l'invention comprenant à la fois des SBR de Tg élevée et des résines renforçantes haute Tg, avec des différents coupages élastomériques et différentes charges renforçantes, un effet surprenant sur les propriétés d'adhérence sur sol mouillé sans trop de dégradation des propriétés de résistance au roulement.

**Tableau 1**

| **Composition N°** | **C1** | **C2** | **C3** | **C4** | **C5** | **C6** |
|---|---|---|---|---|---|---|
| NR (1) | 40 | 40 | 40 | 40 | 40 | 40 |
| BR (2) | 20 | 20 | 20 | 20 | 20 | 20 |
| SBR (3) | 40 | 40 | 40 | - | - | - |
| SBR (4) | - | - | - | 40 | 40 | 40 |
| Noir de carbone (5) | 54 | 54 | 54 | 54 | 54 | 54 |
| Résine (6) | - | 8 | - | - | 8 | - |
| Résine (7) | - | - | 8 | - | - | 8 |
| Paraffine | 1 | 1 | 1 | 1 | 1 | 1 |
| Anti-oxydant (8) | 2 | 2 | 2 | 2 | 2 | 2 |
| ZnO (9) | 2,4 | 2,4 | 2,4 | 2,4 | 2,4 | 2,4 |
| Acide stéarique (10 | 2 | 2 | 2 | 2 | 2 | 2 |
| Soufre | 1,1 | 1,1 | 1,1 | 1,1 | 1,1 | 1,1 |
| Accélérateur (11) | 1,1 | 1,25 | 1,35 | 1,1 | 1,25 | 1,35 |

| | | | | | | |
|---|---|---|---|---|---|---|
| (1) Caoutchouc naturel (2) Polybutadiène Néodyme 98% 1,4-Cis, Tg = -108°C (3) SBR solution fonctionnalisé Etain, non étendu, avec 24% de motifs polybutadiène 1,2, 15,5% de styrène, Tg= -65°C (4) SBR solution fonctionnalisé Etain, non étendu, avec 24% de motifs polybutadiène 1,2, 26,5% de styrène, Tg= -48°C (5) Noir de carbone N234 (6) résine coupe C5/ coupe C9 commercialisée par la société Cray Valley sous la dénomination « Resine THER 8644 » (Tg= 44°C) (7) résine polylimonène commercialisée par la société DRT sous la dénomination "Dercolyte L120" (Tg=72°C) (8) N-1,3-diméthylbutyl-N-phényl-para-phénylènediamine commercialisée par la société Flexsys sous la dénomination "Santoflex 6-PPD" (9) oxyde de zinc (grade industriel - commercialisé par la société Umicore) (10) stéarine commercialisée par la société Uniqema sous la dénomination "Pristerene 4931" (11) N-cyclohexyl-2-benzothiazyl-sulfénamide commercialisée par la société Flexsys sous la dénomination "Santocure CBS" | | | | | | |

**Tableau 2**

| **Composition N°** | **C1** | **C2** | **C3** | **C4** | **C5** | **C6** |
|---|---|---|---|---|---|---|
| *Propriétés après cuisson* | | | | | | |
| tan(δ)ₘₐₓ | 100 | 103 | 103 | 105 | 112 | 108 |
| tan(δ)_{-20°C} | 100 | 108 | 117 | 126 | 151 | 152 |

**Tableau 3**

| **Composition N°** | **C7** | **C8** | **C9** | **C10** | **C11** | **C12** |
|---|---|---|---|---|---|---|
| NR (1) | 60 | 60 | 60 | 60 | 80 | 80 |
| BR (2) | 20 | 20 | 15 | 15 | - | - |
| SBR (3) | 20 | - | 25 | - | 20 | - |
| SBR (4) | - | 20 | - | 25 | - | 20 |
| Noir de carbone (5) | 54 | 54 | 51 | 51 | 54 | 54 |
| Silice (12) | - | - | 7 | 7 | - | - |
| Silane (13) | - | - | 0,6 | 0,6 | - | - |
| Résine (6) | - | 8 | - | 8 | - | 8 |
| Paraffine | 1 | 1 | 1 | 1 | 1 | 1 |
| Anti-oxydant (8) | 2 | 2 | 2 | 2 | 2 | 2 |
| ZnO (9) | 2,4 | 2,4 | 2,4 | 2,4 | 2,4 | 2,4 |
| Acide stéarique (10) | 2 | 2 | 2 | 2 | 2 | 2 |
| Soufre | 1,1 | 1,1 | 1,1 | 1,1 | 1,1 | 1,1 |
| Accélérateur (11) | 1,1 | 1,25 | 1,25 | 1,45 | 1,1 | 1,25 |

| | | | | | | |
|---|---|---|---|---|---|---|
| (12) silice "ZEOSIL 1165 MP" de la société Rhodia sous forme de microperles (BET et CTAB : environ 150-160 m2/g) ; (13) TESPT ("SI69" de la société Evonik-Degussa). | | | | | | |

**Tableau 4**

| **Composition N°** | **C7** | **C8** | **C9** | **C10** | **C11** | **C12** |
|---|---|---|---|---|---|---|
| *Propriétés après cuisson* | | | | | | |
| tan(δ)ₘₐₓ | 100 | 107 | 100 | 102 | 100 | 113 |
| tan(δ)_{-20°C} | 100 | 130 | 100 | 134 | 100 | 148 |

**Tableau 5**

| **Composition N°** | **C13** | **C14** |
|---|---|---|
| NR (1) | 60 | 60 |
| BR (2) | 10 | 10 |
| SBR (3) | 30 | - |
| SBR (4) | - | 30 |
| Noir de carbone (5) | 62 | 62 |
| Résine (6) | - | 8 |
| Paraffine | 1 | 1 |
| Anti-oxydant (8) | 2 | 2 |
| ZnO (9) | 2,4 | 2,4 |
| Acide stéarique (10) | 2 | 2 |
| Soufre | 1,1 | 1,1 |
| Accélérateur (11) | 1,1 | 1,25 |

**Tableau 6**

| **Composition N°** | **C13** | **C14** |
|---|---|---|
| *Propriétés après cuisson* | | |
| tan(δ)ₘₐₓ | 100 | 108 |
| tan(δ)_{-20°C} | 100 | 133 |

## Revendications

1. Pneumatique comportant au moins une composition de caoutchouc à base d'au moins un coupage de caoutchouc naturel, NR, ou polyisoprène de synthèse, et d'un copolymère de butadiène-styrène, SBR, le SBR ayant un taux supérieur ou égal à 20 parties pour cent parties d'élastomère, pce, une charge renforçante comprenant du noir de carbone, **caractérisé en ce que** la composition comprend une résine plastifiante de température de transition vitreuse, Tg, mesurée selon ASTM D3418, supérieure ou égale à 20°C et que le SBR a une Tg, mesurée selon ASTM D3418, supérieure à -65°C et que le taux de résine plastifiante est inférieur ou égal à 10 pce.

2. Pneumatique selon la revendication 1, dans lequel le taux de SBR va de 20 pce à 80 pce.

3. Pneumatique selon la revendication 2, dans lequel le taux de SBR va de 20 à 60 pce, et préférentiellement de 20 à 40 pce.

4. Pneumatique selon l'une quelconque des revendications précédentes, dans lequel la composition comprend un polybutadiène, BR, de préférence dans un taux allant de 5 à 40 pce.

5. Pneumatique selon l'une quelconque des revendications 1 à 4, dans lequel le taux de NR ou polyisoprène de synthèse va de 30 pce à 80 pce.

6. Pneumatique selon la revendication 5, dans lequel le taux de NR ou polyisoprène de synthèse est supérieur ou égal à 40 pce.

7. Pneumatique selon la revendication 6, dans lequel le taux de NR ou polyisoprène de synthèse est supérieur ou égal à 60 pce.

8. Pneumatique selon l'une quelconque des revendications précédentes, dans lequel le SBR a une Tg supérieure ou égale à -50°C.

9. Pneumatique selon l'une quelconque des revendications précédentes, dans lequel le noir de carbone a une surface spécifique CTAB comprise entre 100 et 150 m²/g.

10. Pneumatique selon l'une quelconque des revendications 1 à 9, dans lequel la résine plastifiante à une Tg supérieure ou égale à 30°C.

11. Pneumatique selon l'une quelconque des revendications précédentes, dans lequel le taux de charge renforçante va de 40 à 70 pce, et plus préférentiellement de 45 à 65 pce.

12. Pneumatique selon l'une quelconque des revendications précédentes, dans lequel la charge renforçante comprend une charge inorganique qui constitue au moins 10% en poids de la charge renforçante totale.

13. Pneumatique selon la revendication 12, dans lequel la charge inorganique constitue au plus 50% en poids de la charge renforçante totale.

14. Pneumatique selon la revendication 13, dans lequel la charge inorganique est constituée par de la silice.

## Patentansprüche

1. Reifen, umfassend mindestens eine Kautschukzusammensetzung auf der Basis von mindestens einem Verschnitt von Naturkautschuk, NR, oder Synthese-Polyisopren und einem Butadien-Styrol-, SBR-, Copolymer, wobei das SBR einen Gehalt größer oder gleich 20 Teilen für hundert Teile Elastomer, pce, aufweist, wobei eine Verstärkungscharge Ruß umfasst, **dadurch gekennzeichnet, dass** die Zusammensetzung ein plastifizierendes Harz mit einer Glasübergangstemperatur, Tg, gemessen gemäß ASTM D3418, größer oder gleich 20 °C umfasst, und dass das SBR eine Tg, gemessen gemäß ASTM D3418, größer als -65 °C aufweist, und dass der Gehalt an plastifizierendem Harz kleiner oder gleich 10 pce ist.

2. Reifen nach Anspruch 1, wobei der Gehalt an SBR von 20 pce bis 80 pce reicht.

3. Reifen nach Anspruch 2, wobei der Gehalt an SBR von 20 pce bis 60 pce und vorzugsweise von 20 bis 40 pce reicht.

4. Reifen nach einem der vorhergehenden Ansprüche, wobei die Zusammensetzung ein Polybutadien, BR, vorzugsweise mit einem Gehalt von 5 bis 40 pce umfasst.

5. Reifen nach einem der Ansprüche 1 bis 4, wobei der Gehalt an NR oder Synthese-Polyisopren von 30 pce bis 80 pce reicht.

6. Reifen nach Anspruch 5, wobei der Gehalt an NR oder Synthese-Polyisopren größer oder gleich 40 pce ist.

7. Reifen nach Anspruch 6, wobei der Gehalt an NR oder Synthese-Polyisopren größer oder gleich 60 pce ist.

8. Reifen nach einem der vorhergehenden Ansprüche, wobei das SBR eine Tg größer oder gleich -50 °C aufweist.

9. Reifen nach einem der vorhergehenden Ansprüche, wobei der Ruß eine spezifische Oberfläche CTAB zwischen 100 und 150 m²/g aufweist.

10. Reifen nach einem der Ansprüche 1 bis 9, wobei das plastifizierende Harz eine Tg größer oder gleich 30 °C aufweist.

11. Reifen nach einem der vorhergehenden Ansprüche, wobei der Gehalt der Verstärkungscharge von 40 bis 70 pce und bevorzugter von 45 bis 65 pce reicht.

12. Reifen nach einem der vorhergehenden Ansprüche, wobei die Verstärkungscharge eine anorganische Charge umfasst, die mindestens 10 Gew.-% der gesamten Verstärkungscharge bildet.

13. Reifen nach Anspruch 12, wobei die anorganische Charge höchstens 50 Gew.-% der gesamten Verstärkungscharge bildet.

14. Reifen nach Anspruch 13, wobei die anorganische Charge aus Siliciumdioxid besteht.

## Claims

1. Tyre comprising at least a rubber composition based on at least a blend of natural rubber, NR, or synthetic polyisoprene, and a styrene-butadiene copolymer, SBR, the SBR having a content greater than or equal to 20 parts per hundred parts of elastomer, phr, a reinforcing filler comprising carbon black, **characterized in that** the composition comprises a plasticizing resin having a glass transition temperature, Tg, greater than or equal to 20°C and that the SBR has a Tg greater than -65°C and that the content of plasticizing resin is less than or equal to 10 phr.

2. Tyre according to Claim 1, in which the SBR content ranges from 20 phr to 80 phr.

3. Tyre according to Claim 2, in which the SBR content ranges from 20 to 60 phr, and preferably from 20 to 40 phr.

4. Tyre according to any one of the preceding claims, in which the composition comprises a polybutadiene, BR, preferably in a content ranging from 5 to 40 phr.

5. Tyre according to any one of Claims 1 to 4, in which the content of NR or synthetic polyisoprene ranges from 30 phr to 80 phr.

6. Tyre according to Claim 5, in which the content of NR or synthetic polyisoprene is greater than or equal to 40 phr.

7. Tyre according to Claim 6, in which the content of NR or synthetic polyisoprene is greater than or equal to 60 phr.

8. Tyre according to any one of the preceding claims, in which the SBR has a Tg greater than or equal to -50°C.

9. Tyre according to any one of the preceding claims, in which the carbon black has a CTAB specific surface area of between 100 and 150 m²/g.

10. Tyre according to any one of Claims 1 to 9, in which the plasticizing resin has a Tg greater than or equal to 30°C.

11. Tyre according to any one of the preceding claims, in which the content of reinforcing filler ranges from 40 to 70 phr, and more preferably from 45 to 65 phr.

12. Tyre according to any one of the preceding claims, in which the reinforcing filler comprises an inorganic filler which constitutes at least 10% by weight of the total reinforcing filler.

13. Tyre according to Claim 12, in which the inorganic filler constitutes at most 50% by weight of the total reinforcing filler.

14. Tyre according to any one of Claim 13, in which the inorganic filler consists of silica.
